# EUROPEAN PATENT APPLICATION

(11) **EP 1 571 032 A1**
(43) Date of publication of application: **07.09.2005**
(21) Application number: 05075527.1
(22) Date of filing: 03.03.2005
(51) Int. Cl.: B60K 35/00, B60K 37/06, G01C 21/36

(54) **Vehicle information system with remote communicator**

(30) Priority: 04.03.2004 US 793193
(71) Applicant: Delphi Technologies, Inc., Troy, MI 48007 (US)
(72) Inventor: Davis, Alan C., Fenton, MI 48430 (US); Dybalski, Ronald H., Oxford, MI 48371 (US); Riefe, Richard K., Saginaw, MI 48609 (US); Nash, Richard P., Frankenmuth, MI 48734 (US); Berg, Frederick J., Auburn, MI 48611 (US)
(74) Representative: Denton, Michael John

(57) **Abstract**

An information system (20) for a vehicle includes a computer (22) for handling informational data. This information data includes vehicle data corresponding to operation of the vehicle and external data such as internet web pages and email. A primary display (24) is connected to the computer (22) and in a position to be viewed by a driver of the vehicle. A primary input device (26) allows input to the computer (22) and manipulation of the primary display (24). A remote communicator (38) is also operatively connected to the computer (22) and movable about the vehicle. The remote communicator (38) includes a secondary display (40) and a secondary input device (42) for sending input to the computer (22) and manipulating the secondary display (40). The secondary input device (42) is also programmed to control the primary display (28) for manipulating the informational data that is displayed to the driver.

## Description

### TECHNICAL FIELD

The subject invention relates generally to information systems for vehicles and specifically to information system for vehicles including a remote communication device.

### BACKGROUND OF THE INVENTION

Information systems for vehicles are well known in the prior art. Examples of such systems are described in United States Patent Nos. 5,555,502 to Opel (the '502 patent) and 6,427,115 to Sekiyama (the '115 patent).

The '502 patent discloses an information system for a vehicle. The information system includes a computer connected to the various systems of the vehicle for sending and receiving information from the various systems. The computer is also connected to an input device for receiving inputs from a driver of the vehicle and a display that is viewable by the driver. The driver uses the input device in conjunction with the screen to review vehicle information and adjust any adjustable settings.

The '115 patent discloses an information system for a vehicle with a remote communicator. A computer receives vehicle data relating to the vehicle operation and external data such as navigational information, email, etc. The computer is operatively connected to the remote communicator to send and receive information from the remote communicator. The remote communicator includes a display and allows a driver or an occupant to determine directions to a destination, read email, etc.

Although the information systems of the prior art are useful in disseminating information to the driver and occupants of the vehicle, there remains an opportunity to provide an information system which allows greater interaction and exchange of information between the driver and the occupant.

### SUMMARY OF THE INVENTION

A vehicle information system comprises a computer for handling informational data. This information data includes vehicle data corresponding to operation of the vehicle and associated vehicle systems. A primary display is permanently affixed to the vehicle in a position to be viewed by a driver of the vehicle. The primary display is operatively connected to the computer and changeably displays the informational data to the driver of the vehicle. A remote communicator is also operatively connected to the computer and movable about the vehicle. The remote communicator includes a secondary display for changeably displaying the informational data to an occupant of the vehicle. The remote communicator also includes a secondary input device for sending commands to the computer and controlling the secondary display. The secondary input device is also programmed to control the primary display for manipulating the informational data that is displayed to the driver.

Accordingly, the subject invention allows an occupant of the vehicle to locate information using the remote communicator and send the information to the driver of the vehicle via the primary display. This allows the driver of the vehicle to maintain focus on driving instead, while the occupant of the vehicle can handle distracting tasks such as finding directions, changing the radio station, etc.

### BRIEF DESCRIPTION OF THE DRAWINGS

Other advantages of the present invention will be readily appreciated as the same becomes better understood by reference to the following detailed description when considered in connection with the accompanying drawings wherein:
Figure 1 is a schematic diagram of an information system for a vehicle.
Figure 2 is a perspective view of a drivers position in the vehicle including a primary display and a primary input device.
Figure 3 is a perspective view of the primary input device implemented as a primary switch.
Figure 4 is a view of a main menu displayed on the primary display.
Figure 5 is a view of a sub menu displayed on the primary display.
Figure 6 is a perspective view of a remote communicator including a secondary display and a secondary input device.
Figure 7 is a perspective view of a dashboard of the vehicle including a storage compartment for the remote communicator.
Figure 8 is a perspective view of the dashboard of the vehicle including the remote communicator in a position such that the secondary display may be viewed.
Figure 9 is a perspective view showing the remote communicator connected via a cable.
Figure 10 is a perspective view showing the remote communicator connected via an internal wireless interface.

### DETAILED DESCRIPTION OF THE PREFERRED EMBODIMENT

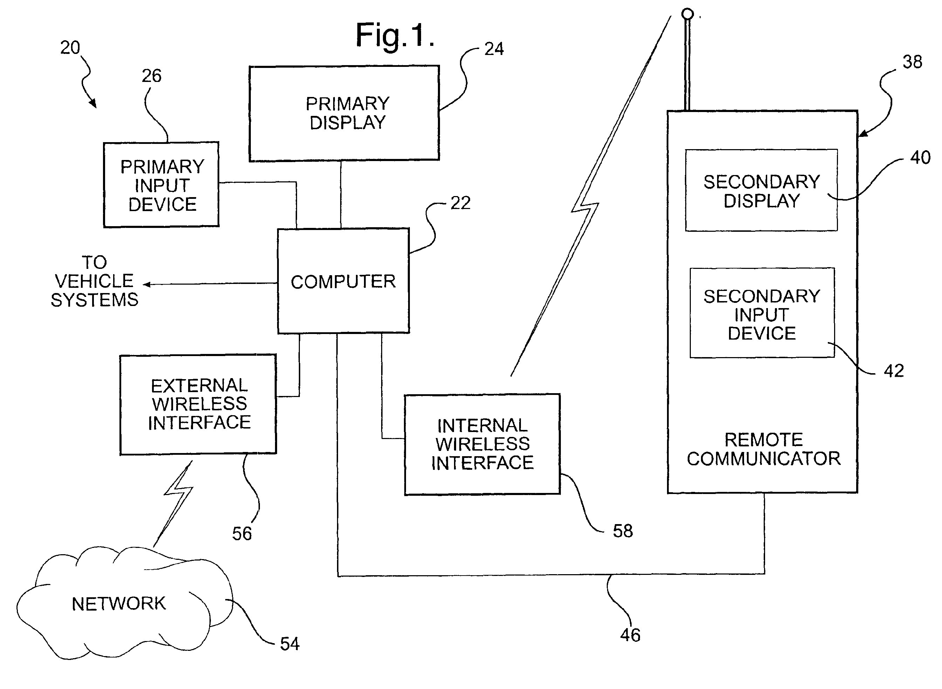

Referring to the Figures, wherein like numerals indicate like parts throughout the several views, an information system for a vehicle is shown at **20** in Figure 1.

The system **20** includes a computer **22** for handling informational data, including vehicle data. The computer **22** preferably includes a main microprocessor to manage the receiving, storing, sending, calculating, and manipulating of the informational data. The computer **22** also includes other necessary electronic components known to those skilled in the art, such as a memory, a hard drive, communication interfaces, a power supply/converter, digital and analog converters, etc.

The computer **22** is connected to vehicle systems that provide the vehicle data which corresponds to the operation of the vehicle and associated vehicle systems. Examples of these vehicle systems include, but are not limited to, an engine controller, a climate control system, an integrated cellular phone system, a sound system (radio), a global positioning system (GPS) receiver, and a video entertainment center (such as a DVD player). Examples of vehicle data provided by the vehicle systems include, but are not limited to vehicle speed, engine RPMs, engine oil pressure, engine coolant temperature, battery voltage, vehicle maintenance reminders, climate control system settings, outside temperature, radio settings, integrated cellular phone settings, compass headings, video images, sound files, digital radio broadcasts, and navigational information.

The informational data handled by the computer **22** also includes external data from a network **54** external to the vehicle. An external wireless interface **56** is operatively connected to the computer **22** to communicate with the network **54** for sending and receiving the external data. The external data includes, but is not limited to internet web pages, e-mail, and navigational information.

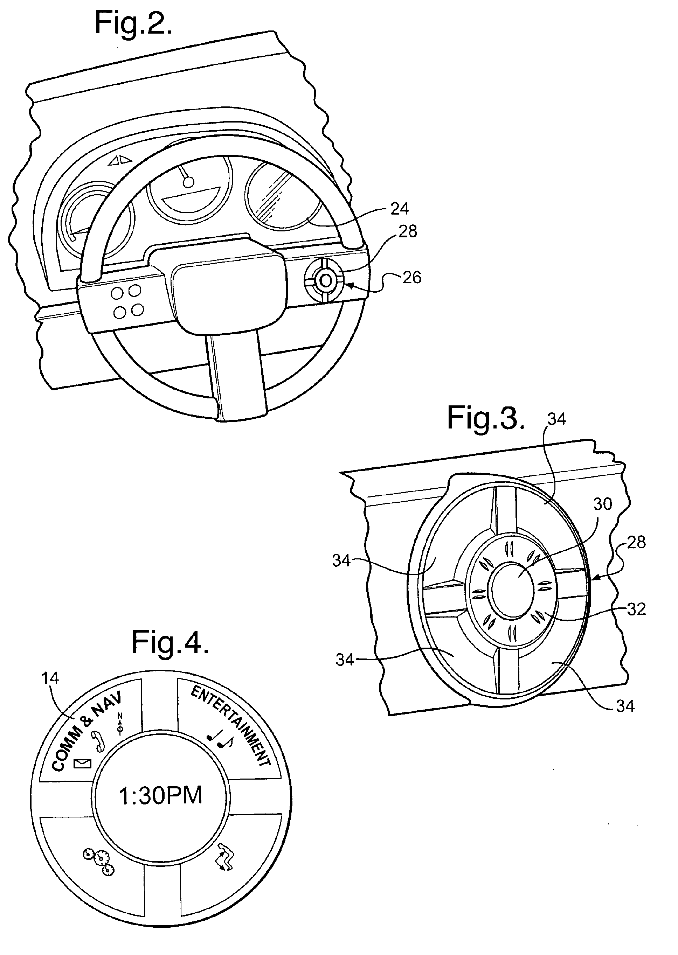

Referring now to Figure 2, a primary display **24** is permanently affixed to the vehicle in a position to be viewed by a driver of the vehicle. Although the primary display **24** is shown in Figure 2 as part of an instrument panel, the primary display **24** could be implemented in other locations, such as on a dashboard, a sun visor, or projected on a windshield as a "heads-up" display.

The primary display **24** is operatively connected to the computer **22** for displaying the informational data to the driver of the vehicle. A primary input device **26** is also operatively connected to the computer **22.** The primary input device **26** allows the driver, or other occupant of the vehicle, to send commands to the computer **22.** The driver or other occupant also uses the primary input device **26** to control the primary display **14,** including changing the informational data that is displayed to the driver.

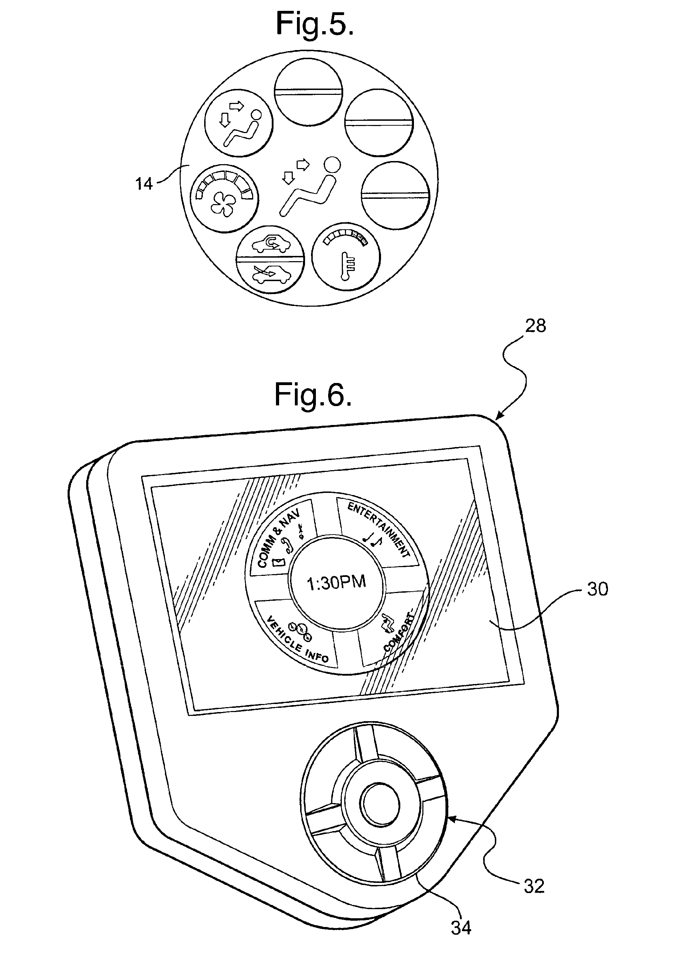

A primary switch **28** may be implemented as the primary input device **26.** The primary switch may be mounted on the steering wheel, the dashboard, or other suitable locations within the vehicle. Referring now to Figure 3, the primary switch **28** preferably includes a pushbutton **30,** a rotary thumbwheel **32,** and a plurality of mode switches **34.** The pushbutton **30,** rotary thumbwheel **32,** and plurality of mode switches **34** are used in conjunction with one another to allow the driver, or other occupant, to navigate and control the primary display **24.** For example, each of the plurality of mode switches may correspond to a category of vehicle systems. Examples of these categories could include "Vehicle Information", "Comfort", "Entertainment", and "Communication and Navigation". These categories may appear on the primary display **24,** as shown in Figure 4. Each mode switch **34** is preferably color-coded to match colors of the categories shown on the primary display **24.** When one of the mode switches, such as "Comfort", is depressed, the primary display **24** changes to show the detailed settings for that category, as exemplified in Figure 5. The rotary thumbwheel **32** is then used to navigate through the detailed settings. Selection of a particular detailed setting is accomplished by depressing the pushbutton **30.**

Alternatively, the primary input device **26** may be implemented as a touchscreen interface (not shown). Touchscreen interfaces are well known to those skilled in the art. Typically, a transparent layer consisting of a resistive or a capacitive material is placed over a display, such as the primary display **24** of the subject invention. The driver or other occupant taps the layer, with a finger or a stylus, to select an item shown on the primary display **24.** The touchscreen interface then determines the location of tapped selection and sends location coordinates to the computer **22.** The computer **22** correlates the coordinates with the images shown on the primary display **24** to determine what has been selected.

Those skilled in the art appreciate that other implementations of the primary input device **26,** other than the primary switch **28** and touchscreen interface described above, are possible. These other implementations include, but are not limited to, a keypad, a keyboard, and a speech recognition system.

The system **20** also includes a remote communicator **38** operatively connected to the computer **22.** The remote communicator **38,** shown in Figure 6, is movable about the vehicle for use by the driver or the other occupants of the vehicle. The remote communicator includes a secondary display **40** for displaying the informational data to the driver or the other occupants. The secondary display **40** can display the same informational data as is available on the primary display **24** with the same formatting.

The remote communicator **38** also includes a secondary input device **42** for sending commands to the computer **22** and controlling the secondary display **40.** The secondary input device **42** is analogous to the primary input device **26.** It is preferred that the secondary input device **42** be implemented as a secondary switch **44.** As with the primary switch **28,** the secondary switch **44** preferably includes the pushbutton **20,** the rotary thumbwheel **22,** and the plurality of mode switches **24.** Operation with the secondary switch **44** is comparable to operation of the primary switch **28** described above. Alternatively, the secondary input device **42** may be implemented as the touchscreen interface as described above, or any other suitable implementation.

The secondary input device **32** of the remote communicator **28** is also programmed to allow control of the primary display **14.** This allows occupants of the vehicle to manipulate the informational data that is displayed to the driver. For example, the occupant could operate the remote communicator **28** to find navigational information, such as directions to a particular destination. Once the directions are located, the occupant can transfer the directions to the primary display **14.** This allows the driver of the vehicle to focus his or her concentration on the task of driving, instead of looking up directions. Alternatively, the occupant of the vehicle could use the remote communicator **28** to find several restaurants and their locations superimposed on a map. The occupant could then send this map to the primary display **14,** allowing the driver to choose a restaurant and drive to its location.

The computer **22** and remote communicator **38** are programmable to prevent certain informational data from being displayed on the secondary display **40** or manipulated with the secondary input device **42.** For example, the driver of the vehicle could prevent the occupant using the remote communicator **38** from changing radio stations, altering climate controls, etc.

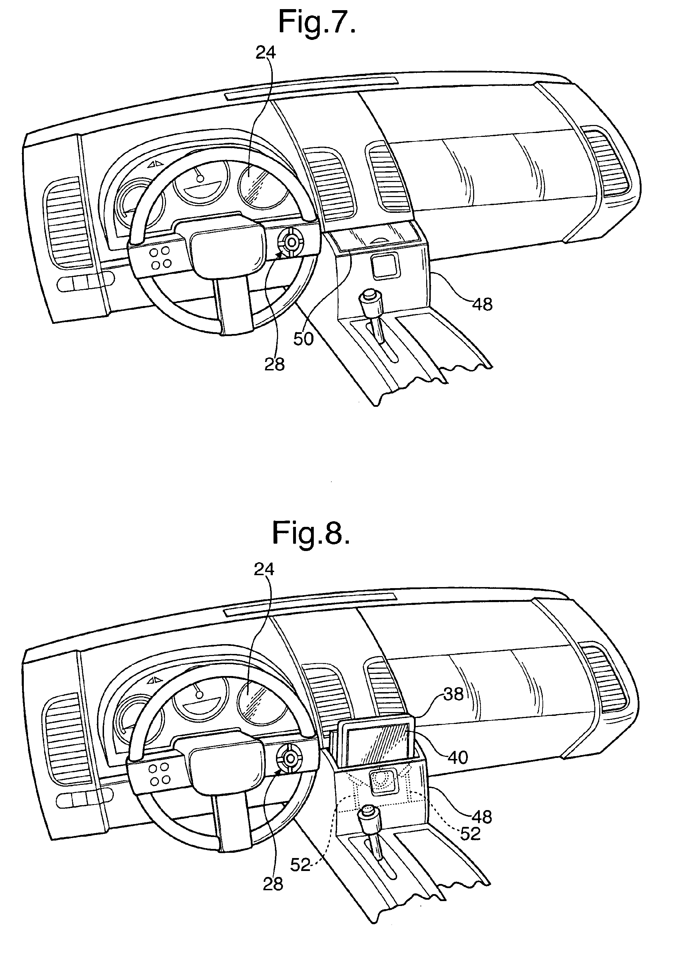

Referring to Figure 7, the vehicle also includes a storage compartment **48** for storage of the remote communicator **38.** The storage compartment is preferably located in a center console of the vehicle. The storage compartment **48** includes a first configuration for completely concealing the remote communicator **38** when not in use. The storage compartment **48** includes a lid **50** to cover and conceal the remote communicator **38** while in the first configuration. The lid may be opened manually or by an automatic mechanism (not shown).

The storage compartment **48** also includes a second configuration. In this second configuration, the remote communicator **38** is held in a position that allows viewing of the secondary display **40,** as shown in Figure 8. It is preferred that the storage compartment **48** include a lifting apparatus **52** for moving the remote communicator **28** between the first configuration and the second configuration. The lifting apparatus **52** may be manually or automatically operable.

In addition to controlling the primary display **24,** the primary input device **26** is also programmed to control the secondary display **40** of the remote communicator **38.** This is especially beneficial when the remote communicator is housed in the storage compartment **48** in its second configuration, where the secondary display **40** is viewable. The driver of the vehicle can then use the secondary display **40** as a supplement to the primary display **40.** For example, the drive could set the primary display **24** to show climate control settings, while having the secondary display **40** show radio control information.

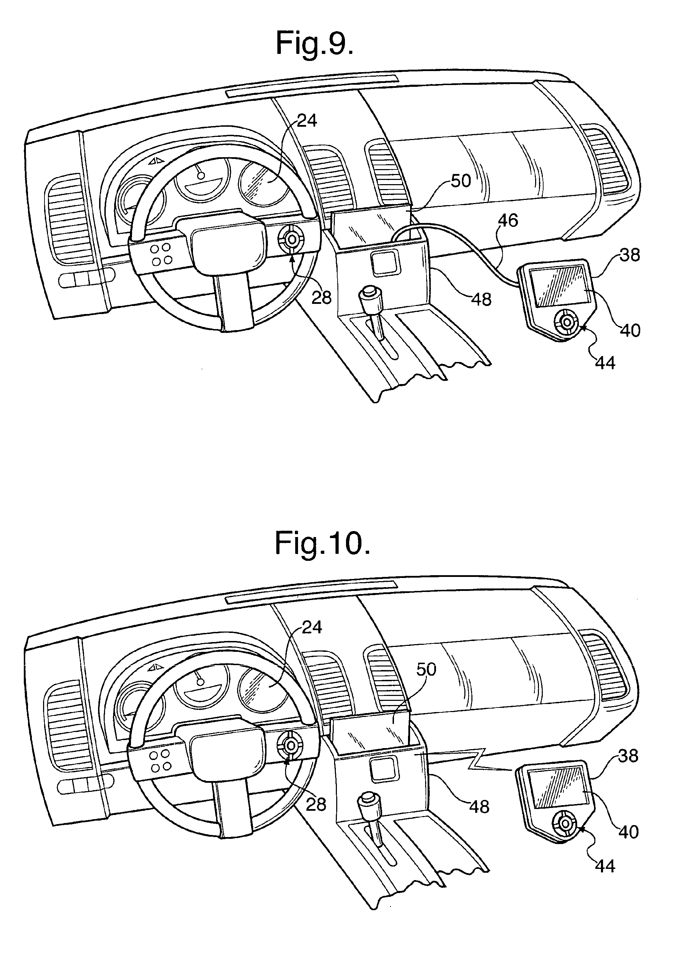

Numerous devices may be used to operatively connect the remote communicator **28** to the computer **12.** One possible device, as shown in Figure 9, is a cable **36** to physically "hardwire" the remote communicator **28** to the computer **12** for transferring the informational data. Those skilled in the art realize the cable **36** may carry the informational data via electrical or optical signals. A second possible device is preferred to operatively connect the remote communication **28** and the computer **12.** The second possible device is an internal wireless interface. The internal wireless interface links the remote communicator **28** to the computer without the use of a physical interface, as shown in Figure 10. Preferably, the remote communicator **28** and the computer **12** are both outfitted with radio transceivers (not shown). The radio transceivers communicate the informational data to one another using radio waves. Alternatively, optical transceivers can be implemented to communicate using waves in the optical spectrum. Suitable protocols include, but are not limited to, Bluetooth, 802.11, and IRDA.

While the invention has been described with reference to an exemplary embodiment, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

## Claims

1. A vehicle information system **(20)** comprising:
a computer **(22)** for handling informational data including vehicle data corresponding to operation of a vehicle and associated vehicle systems;
a primary display **(24)** permanently affixed to the vehicle in a position to be viewed by a driver of the vehicle and operatively connected to said computer **(22)** for changeably displaying the informational data to the driver of the vehicle;
a remote communicator **(38)** operatively connected to said computer **(22)** and movable about the vehicle;
said remote communicator **(38)** including a secondary display **(40)** for changeably displaying the informational data to an occupant of the vehicle;
said remote communicator **(38)** also including a secondary input device **(42)** for sending commands to said computer **(22)** and controlling said secondary display **(40);** and
said secondary input device **(42)** being programmed to control said primary display **(24)** for manipulating the informational data that is displayed to the driver.

2. A system **(20)** as set forth in claim 1 further comprising a primary input device **(26)** operatively connected to said computer **(22)** for sending commands to said computer **(22)** and controlling said primary display **(24).**

3. A system **(10)** as set forth in claim 2 wherein said primary input device **(26)** is programmed to control said secondary display **(40).**

4. A system **(10)** as set forth in claim 1 further comprising a storage compartment **(48)** for storage of said remote communicator **(38).**

5. A system **(10)** as set forth in claim 4 wherein said storage compartment **(48)** is located in a center console of the vehicle.

6. A system **(10)** as set forth in claim 4 wherein said storage compartment **(48)** includes a first configuration for completely concealing said remote communicator **(38).**

7. A system **(10)** as set forth in claim 6 wherein said storage compartment **(48)** includes a second configuration for holding said remote communicator **(38)** in a position for allowing viewing of said secondary display screen **(40).**

8. A system **(10)** as set forth in claim 7 wherein said storage compartment **(48)** includes a lifting apparatus **(52)** for moving said remote communicator **(38)** between said first configuration and said second configuration.

9. A system **(10)** as set forth in claim 1 further comprising a cable **(46)** for linking said remote communicator **(38)** to said computer **(22)** for communication of the informational data.

10. A system **(10)** as set forth in claim 1 further comprising a internal wireless interface**(58)** for linking said remote communicator **(38)** to said computer **(22)** for communication of the informational data.

11. A system **(10)** as set forth in claim 2 wherein said primary input device **(26)** is further defined as a primary switch **(28).**

12. A system **(10)** as set forth in claim 11 wherein said primary switch **(28)** includes a pushbutton **(30),** a rotary thumbwheel **(32),** and a plurality of mode switches **(34).**

13. A system **(10)** as set forth in claim 12 wherein said primary display **(24)** displays a plurality of categories.

14. A system **(10)** as set forth in claim 13 wherein each of said categories are color-coded with a unique color.

15. A system **(10)** as set forth in claim 14 wherein each of said plurality of mode switches **(34)** are color-coded to match the unique colors of the plurality of categories.

16. A system **(10)** as set forth in claim 13 wherein said primary categories include "Vehicle Information", "Comfort", "Entertainment", and "Communication and Navigation".

17. A system **(10)** as set forth in claim 2 wherein said primary input device **(26)** is further defined as a touchscreen interface **(36).**

18. A system **(10)** as set forth in claim 1 wherein said secondary input device **(42)** is further defined as a secondary switch **(44).**

19. A system **(10)** as set forth in claim 18 wherein said secondary switch **(44)** includes a pushbutton **(30),** a rotary thumbwheel **(32),** and a plurality of mode switches **(34).**

20. A system **(10)** as set forth in claim 19 wherein said secondary display **(40)** displays a plurality of categories.

21. A system **(10)** as set forth in claim 20 wherein each of said plurality of categories are color-coded with a unique color.

22. A system **(10)** as set forth in claim 21 wherein each of said plurality of mode switches **(34)** are color-coded to match the unique colors of the plurality of categories.

23. A system **(10)** as set forth in claim 21 wherein said primary categories include "Vehicle Information", "Comfort", "Entertainment", and "Communication and Navigation".

24. A system **(10)** as set forth in claim 1 wherein said secondary input device **(42)** is further defined as a touchscreen interface **(36).**

25. A system **(10)** as set forth in claim 1 wherein said informational data includes external data and said computer **(22)** includes an external wireless interface **(56)** to communicate with a network **(54)** for sending and receiving the external data.
